# EUROPEAN PATENT APPLICATION

(11) **EP 4 844 657 A1**
(43) Date of publication of application: **25.11.2026**
(21) Application number: 26180714.3
(22) Date of filing: 22.05.2026
(51) Int. Cl.: G06Q 10/1053

(54) **METHOD AND SYSTEM FOR LARGE LANGUAGE MODEL DRIVEN CONFIGURABLE AUTONOMOUS INTERVIEWS**

(30) Priority: 21.05.2025 IN 202521049095
(71) Applicant: Tata Consultancy Services Limited, Mumbai, Maharashtra 400 021 (IN)
(72) Inventor: SRINIVASAN, Swarna, 600119 Chennai, Tamil Nadu (IN); PATIL, Aditya, 600096 Chennai, Tamil Nadu (IN); MADHU, Manu, 600096 Chennai, Tamil Nadu (IN); SHARMA, Aniket, 600096 Chennai, Tamil Nadu (IN); MISHRA, Prashant, 600096 Chennai, Tamil Nadu (IN)
(74) Representative: Goddar, Heinz J.

(57) **Abstract**

A method and system for Large Language Model (LLM) driven configurable autonomous interviews is provided. Evaluation parameters are generated from a job description based on set of rubrics, which act as goals for each of the plurality of nodes defined for an interview process to progress through. The nodes hold the prompt template which is the instruction to the LLM. Each of these nodes is controlled by a central router node which decides the next step to be followed based on the context / current state at that instance. The state is centrally maintained and is updated with the latest LLM and user response with each interaction. The system finally evaluates and concludes with an interview candidate at respective nodes. The system is based on asynchronous, stateless model, and provides efficient memory resource management, enhances scalability, and improves response times.

## Description

### CROSS-REFERENCE TO RELATED APPLICATIONS AND PRIORITY

The present application claims priority to Indian application no. 202521049095, filed on May 21, 2025.

### TECHNICAL FIELD

The embodiments herein generally relate to the field of Generative Artificial Intelligence (GenAI) and, more particularly, to a method and system for Large Language Model (LLM) driven configurable autonomous interviews.

### BACKGROUND

Organizations today face challenge in matching job placement rates with client expectations. Even though skilled candidates are available, the rate at which candidates successfully get through the client interviews is low. This leads to Subject Matter Experts (SMEs) spending significant time training candidates who ultimately do not meet the required standards. Interview simulators for training candidates are explored by organizations. Recent approaches addressing the issue utilize capability of Large Language Models (LLMs) to generate autonomous interview systems.

However, current LLM based approaches face technical limitations. First, LLMs based current approaches have limitation in addressing scalability of handling number of interview candidates simultaneously due to inefficient memory management and hardware limitations. Secondly, LLMs have characteristic challenge in maintaining contextual relevancy of conversation, which is utmost important in interview progress and conclusion.

### SUMMARY

Embodiments of the present disclosure present technological improvements as solutions to one or more of the above-mentioned technical problems recognized by the inventors in conventional systems.

For example, in one embodiment, a method for autonomous interview simulation is provided. The method includes extracting from a job description (JD) via a first instance of LLM, a structured JD format by: performing validation of the JD for technical and contextual detail; extracting a plurality job parameters; and checking if content associated with the plurality of parameters is present and detailed, wherein gaps are identified and the first instance of the LLM is prompted to restructure and standardized the content.

Further, the method includes prompting the first instance of the LLM to generate a plurality of evaluation parameters from the structured JD format via a prompt constructed from the structured JD, wherein the plurality of evaluation parameters enable dynamically planning of an interview of a candidate applying for the JD. Each of the plurality of evaluation parameters are adjusted one at a time for precise control over the plurality of evaluation parameters to be assessed. Each of the plurality of evaluation parameter is treated as a goal assigned to a corresponding node among a plurality of nodes during the interview, the plurality of nodes comprising a greet node, an introduction node, an out of context node, a question node, an evaluation node and a conclusion node handled by a router node centrally controlling progression of the interview process through the plurality of nodes. Each of the plurality of nodes hold a prompt template for utilizing each of the plurality of evaluation parameters as a basis for generating questions and conducting evaluations.

Furthermore, the method includes initiating the interview process with the candidate in accordance with the plurality of evaluation parameters and a resume context extracted from a resume of the candidate. The interview process comprises handling via the router node, a progression of the interview process through the plurality of nodes, in accordance with a change of a state triggered at each node based on response of the candidate to a dialogue generated by an associated second instance of the LLM at each node, wherein each node is configured with an associated goal to be achieved before proceeding to a successive node among the plurality of nodes, and wherein the evaluation node analyzes the response for questions generated by the associated second instance LLM at the question node. Further, iteratively evaluating against each of the plurality of evaluation parameters at the evaluation node via the associated second instance of LLM a response of the candidate to the dialogue at the question node with reference to a threshold value indicative of quality of the response. Thereafter, performing final evaluation of each of the evaluated plurality of parameters at the conclusion node to compile score in context of the associated goal of each node, wherein the conclusion node with the associated second instance of the LLM generates a final response summarizing the interview performance.

In another aspect, a system for autonomous interview simulation is provided. The system comprises a memory storing instructions; one or more Input/Output (I/O) interfaces; and one or more hardware processors coupled to the memory via the one or more I/O interfaces, wherein the one or more hardware processors are configured by the instructions to extract from a job description (JD) via a first instance of LLM, a structured JD format by: performing validation of the JD for technical and contextual detail; extracting a plurality job parameters; and checking if content associated with the plurality of parameters is present and detailed, wherein gaps are identified and the first instance of the LLM is prompted to restructure and standardized the content.

Further, the system includes prompting the first instance of the LLM to generate a plurality of evaluation parameters from the structured JD format via a prompt constructed from the structured JD, wherein the plurality of evaluation parameters enable dynamically planning of an interview of a candidate applying for the JD. Each of the plurality of evaluation parameters are adjusted one at a time for precise control over the plurality of evaluation parameters to be assessed. Each of the plurality of evaluation parameter is treated as a goal assigned to a corresponding node among a plurality of nodes during the interview, the plurality of nodes comprising a greet node, an introduction node, an out of context node, a question node, an evaluation node and a conclusion node handled by a router node centrally controlling progression of the interview process through the plurality of nodes. Each of the plurality of nodes hold a prompt template for utilizing each of the plurality of evaluation parameters as a basis for generating questions and conducting evaluations.

Furthermore, the system includes initiating the interview process with the candidate in accordance with the plurality of evaluation parameters and a resume context extracted from a resume of the candidate. The interview process comprises handling via the router node, a progression of the interview process through the plurality of nodes, in accordance with a change of a state triggered at each node based on response of the candidate to a dialogue generated by an associated second instance of the LLM at each node, wherein each node is configured with an associated goal to be achieved before proceeding to a successive node among the plurality of nodes, and wherein the evaluation node analyzes the response for questions generated by the associated second instance LLM at the question node. Further, iteratively evaluating against each of the plurality of evaluation parameters at the evaluation node via the associated second instance of LLM a response of the candidate to the dialogue at the question node with reference to a threshold value indicative of quality of the response. Thereafter, performing final evaluation of each of the evaluated plurality of parameters at the conclusion node to compile score in context of the associated goal of each node, wherein the conclusion node with the associated second instance of the LLM generates a final response summarizing the interview performance.

In yet another aspect, there are provided one or more non-transitory machine-readable information storage mediums comprising one or more instructions, which when executed by one or more hardware processors causes a method for autonomous interview simulation.

The one or more instructions which when executed by the one or more hardware processors cause: extracting from a job description (JD via a first instance of LLM, a structured JD format by: performing validation of the JD for technical and contextual detail; extracting a plurality job parameters; and checking if content associated with the plurality of parameters is present and detailed, wherein gaps are identified and the first instance of the LLM is prompted to restructure and standardize the content.

Further, the one or more instructions which when executed by the one or more hardware processors cause prompting the first instance of the LLM to generate a plurality of evaluation parameters from the structured JD format via a prompt constructed from the structured JD, wherein the plurality of evaluation parameters enable dynamically planning of an interview of a candidate applying for the JD. Each of the plurality of evaluation parameters are adjusted one at a time for precise control over the plurality of evaluation parameters to be assessed. Each of the plurality of evaluation parameter is treated as a goal assigned to a corresponding node among a plurality of nodes during the interview, the plurality of nodes comprising a greet node, an introduction node, an out of context node, a question node, an evaluation node and a conclusion node handled by a router node centrally controlling progression of the interview process through the plurality of nodes. Each of the plurality of nodes hold a prompt template for utilizing each of the plurality of evaluation parameters as a basis for generating questions and conducting evaluations.

Furthermore, the one or more instructions which when executed by the one or more hardware processors cause initiating the interview process with the candidate in accordance with the plurality of evaluation parameters and a resume context extracted from a resume of the candidate. The interview process comprises handling via the router node, a progression of the interview process through the plurality of nodes, in accordance with a change of a state triggered at each node based on response of the candidate to a dialogue generated by an associated second instance of the LLM at each node, wherein each node is configured with an associated goal to be achieved before proceeding to a successive node among the plurality of nodes, and wherein the evaluation node analyzes the response for questions generated by the associated second instance LLM at the question node. Further, iteratively evaluating against each of the plurality of evaluation parameters at the evaluation node via the associated second instance of LLM a response of the candidate to the dialogue at the question node with reference to a threshold value indicative of quality of the response. Thereafter, performing final evaluation of each of the evaluated plurality of parameters at the conclusion node to compile score in context of the associated goal of each node, wherein the conclusion node with the associated second instance of the LLM generates a final response summarizing the interview performance.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a functional block diagram of a system for Large Language Model (LLM) driven configurable autonomous interviews, in accordance with some embodiments of the present disclosure.
FIGS. 2A, 2B and 2C is a process flow illustrating an architectural overview of the system of FIG. 1, in accordance with some embodiments of the present disclosure.
FIGS. 3A and 3B is a flow diagram illustrating a method for the LLM driven configurable autonomous interviews, using the system depicted in FIG. 1, and the architectural overview in FIGS. 2A, 2B, and 2C, in accordance with some embodiments of the present disclosure.
FIGS. 4A through 4F depict an example interview process handled by the system 100, in accordance with some embodiments of the present disclosure.
FIG. 5 depicts experiments performed for observing scalability performance of the system of FIG. 1, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for Large Language Model (LLM) driven configurable autonomous interviews.

As mentioned existing LLM based solutions face a technical challenge in providing effective memory management due to hardware constraints due to the graph-based approach is used to manage user interactions during the interview process per candidate. This adds significant performance bottleneck, particularly concerning memory management and system efficiency. The primary issue stems from the way threads are allocated and utilized. Each user session of the candidate attempting the interview blocks a dedicated thread (i.e., a system process) until the entire interview flow is completed. Since the existing system maintained the state persistence across multiple interactions, active threads remained occupied throughout the entire process. This design leads to a severe limitation as more and more users (interviewing candidates) are engaged with the system. The available processing cores get exhausted. Once the existing system reaches its thread capacity, new users or candidates have to wait for previous sessions to be completed before they can proceed. This queueing effect results in delays, reduced responsiveness, and inefficient resource utilization, ultimately degrading the overall user experience.

The method and system disclosed herein provide a stateless implementation for optimized performance and memory constraints. The method discloses a graph-based system transitioned to a stateless architecture, where user interactions are managed asynchronously. A thread, which is a lightweight sequence of execution within a process that can run concurrently with other threads. Herein, the thread is only active during the specific interaction moment, which typically lasts only a few milliseconds. Thus, unlike the existing approach, where threads remained blocked throughout the interview process, the method discloses a design where the thread is terminated immediately after completing an interaction with the user, interchangeably referred to as candidate. To maintain continuity without blocking resources, the system disclosed herein provides a caching mechanism for state management. Instead of holding the state within a persistent thread, session data is stored in a cache memory that allows quick access and retrieval when needed. The approach disclosed herein significantly improves efficiency by preventing threads from being locked unnecessarily. Since the graph no longer maintained a state outside of the brief interaction window, resources are freed up, allowing more users to be processed simultaneously. By adopting this asynchronous, stateless model, the system disclosed herein eliminates thread exhaustion issues, enhances scalability, and improves response times. As a result, the system is technically advanced to support a larger number of concurrent users without performance degradation, ensuring a seamless and efficient experience for all users.

Another technical challenge with a LLM based system is efficient usage of context window. As user count of simultaneous interview processes increases it is important to ensure that the conversation remains contextually relevant by retaining access to both the conversation history and the primary objective of the interview session. However, continuously appending new messages to the conversation history poses a significant risk. Eventually, this would lead to exceeding the context window limitations of the Large Language Model (LLM). Since each word in the conversation is stored as a token, surpassing the context window of the LLM would result in the loss of previous memory, causing the model to generate hallucinated or incoherent responses. Additionally, exceeding the context limit could lead to the model deviating from the intended interview objective or goal and following unintended user instructions instead. Addressing above issues is crucial to maintaining coherence and accuracy in the interview process.

Thus, the disclosure herein provides a solution via optimized context management through modular prompting. The method disclosed provides a modular approach that breaks down the interview objective into prompts and nodes, each node with an atomic objective or goal. This follows the Single Responsibility Principle (SRP), ensuring that every interaction with the LLM is purposeful and concise. Instead of sending the entire conversation history with each request, the system is structured such that each prompt and corresponding node retains its own specific goal or objective and a limited memory of relevant interactions. This ensures that only the minimum required data is sent to the LLM, optimizing the available context window while preserving conversation relevance.

To further maintain contextual continuity, the conversation history is stored in a cached memory. Additionally, introduced a separate validation node that assesses whether each interaction aligned with the predefined goal or objective of the active node. If the response is relevant, the conversation seamlessly progresses to the next node. However, if the response is deviated from the intended objective, the system redirects the conversation to a predefined clarification node. This node prompts the user for clarification, ensuring that the interaction remains aligned with the core purpose of the interview.

By implementing this structured approach, the system disclosed minimizes the risk of exhausting the context window of LLM, mitigates hallucination risks, and maintains a guided, objective or goal-driven conversation flow. This approach herein significantly improves response accuracy, scalability, and the overall efficiency of the LLM-powered interview system.

Further, Large Language Models (LLMs) are known for their variability in response formats, making it difficult to rely on them for structured and predictable outputs. This inconsistency posed a significant challenge for our system, which required a uniform output format to facilitate seamless communication through REST APIs. Without a standardized format, responses from the LLM could be unpredictable, leading to parsing errors, misinterpretation of data, and increased complexity in downstream processing. Inconsistencies could break integrations, making it difficult to maintain a robust and scalable system. Thus ensuring, a reliable, structured response format is essential to achieve automation and efficiency in API interactions.

The method and system disclosed herein provides a solution by using Rule-Based Parsing and Output Formatting Enforcement. A two-pronged approach is utilized to enforce a consistent output format: Rule-Based Parsers for Structured Data Extraction: A rule-based parsers is developed that processed and transformed LLM responses into a structured format. These parsers ensure that the output conformed to predefined schemas, reducing ambiguity and enhancing the reliability of data exchange. By applying strict parsing rules, errors are minimized, and the consistency of API communication is improved.

To further enhance consistency, explicit output formatting instructions are embedded within each prompt. These instructions acted as constraints, guiding the LLM to produce responses that adhered to the required structure. By clearly specifying expected data formats (e.g., JSON, key-value pairs, or tabular structures), the predictability of LLM outputs is significantly improved. By combining structured parsing with detailed prompt engineering, the response format is standardized enabling smooth integration with REST APIs. This approach not only improves system reliability but also reduces post-processing overhead, making the overall solution more efficient and scalable.

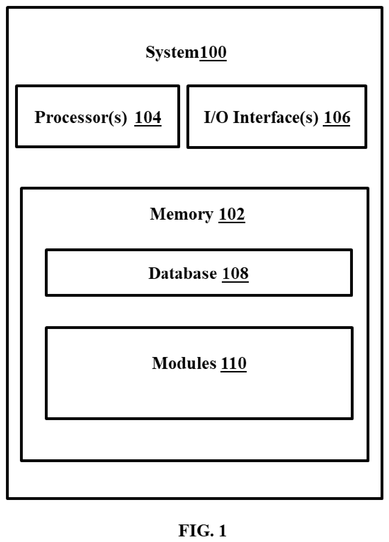

Referring now to the drawings, and more particularly to FIGS. 1 through 5, where similar reference characters denote corresponding features consistently throughout the figures, there are shown preferred embodiments, and these embodiments are described in the context of the following exemplary system and/or method.

FIG. 1 is a functional block diagram of a system 100 for Large Language Model (LLM) driven configurable autonomous interviews, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 can include the LLM model with multiple instances for multiple objectives or goals. For example, the LLM model used for implementing the method is GPT 3.5 Turbo^{™}, which is capable of understanding and generating natural language The examples of the LLM model provided herein are not to be construed as limitation and any similar LLM models capable of achieving desired objective can be used. A plurality of instances of LLM are used. The LLM instances process prompts as instructions by predicting likely continuations based on patterns learned during training. Instruction tuning refines this by exposing the model to prompt-response pairs, aligning its output with intended tasks, and making it more responsive to directive input.

The plurality of modules 110 include programs or coded instructions that supplement applications or functions performed by the system 100 for executing different steps involved in the process of LLM driven configurable autonomous interviews, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or
repository) 108 may include a plurality of abstracted piece of code for refinement and data that is processed, received, or generated as a result of the execution of the plurality of modules in the module(s) 110.

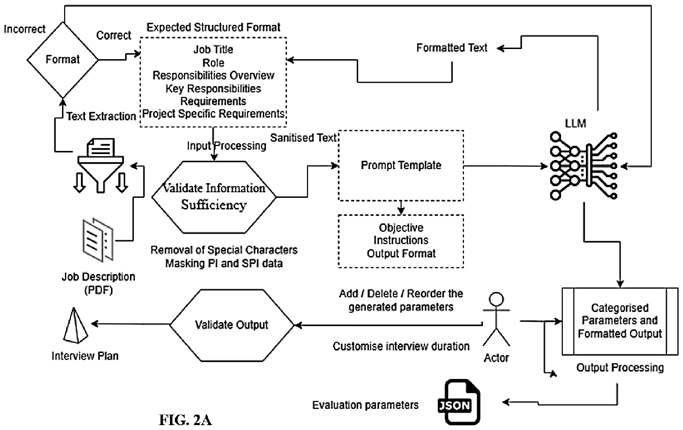

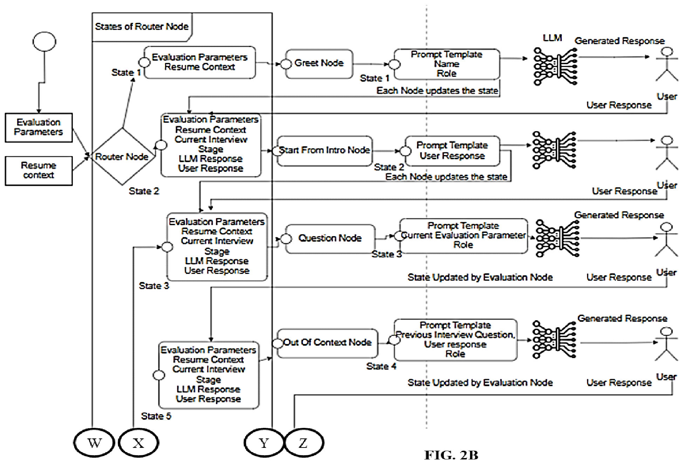

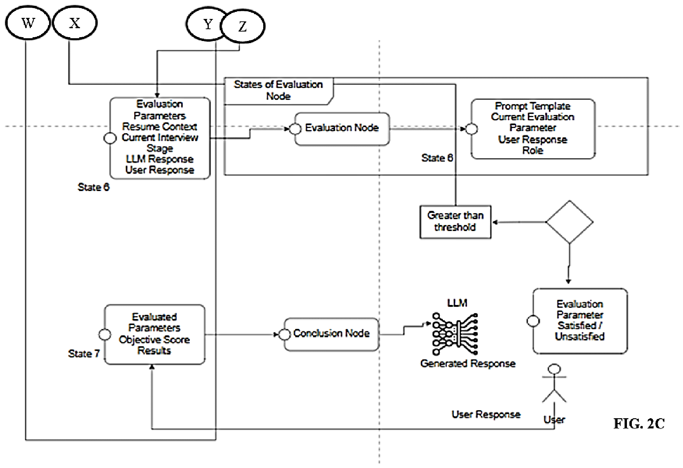

Although the database 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2 through FIG. 4.

FIG. 2A through 2C is a process flow illustrating an architectural overview of the system of FIG. 1, in accordance with some embodiments of the present disclosure. As depicted in FIG. 2A, for each of a plurality of job descriptions (JDs) provided by an organization the system 100 is configured to interpret the JDs and ready to simultaneously set up a plurality of interviews for each of a plurality of candidates intended to appear the simulated interview in accordance with associated JD.

FIG. 2A depicts the process of generating evaluation parameters using the text extracted from the job description as context. The evaluation parameters are generated based on set of rubrics which act as goals for each of the nodes mentioned. A rubric can be defined as a descriptive guideline, a scoring guide or specific preestablished performance criteria in which each level of performance is described to contrast it with the performance at other levels.

As well known in the performance evaluation domain, a set of rubrics is used to guide the rating of performance, products, or processes of a candidate at various levels of performance. Since, system uses rubrics - based approach, it can work across any document/text that has enough information to generate the parameters. In case of information insufficiency, a human user can manually add it.

FIGS. 2B and 2C depict the internal working of the system 100 through nodes and states. The nodes actually hold the prompt template which is the instruction to the LLM. Each of these nodes is controlled by a central router node which decides the next step to be followed based on the context / current state at that instance. The state is centrally maintained and is updated with the latest LLM and user response with each interaction.

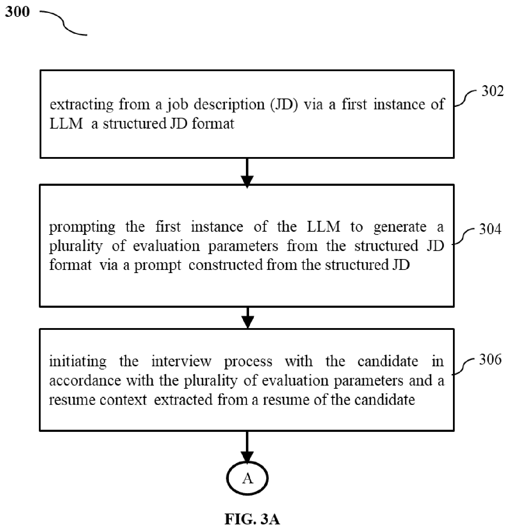

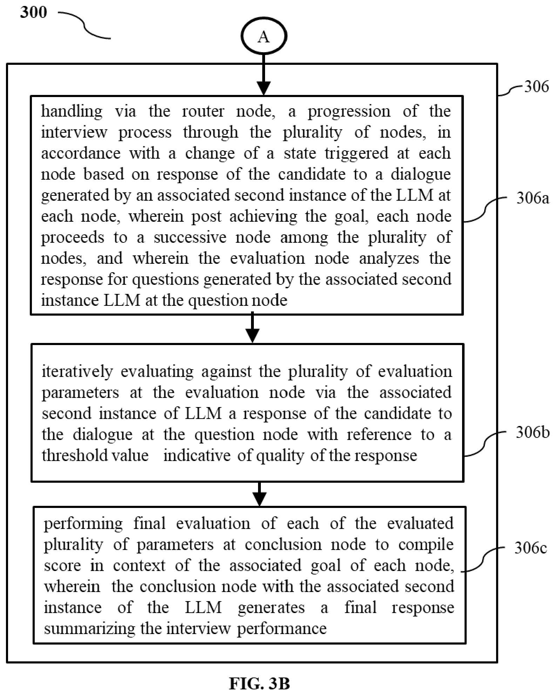

FIG. 2A through 2C is better understood in conjunction with FIG. 3 below that explains process for each candidate for whom interview is set up.

FIGS. 3A and 3B is a flow diagram illustrating a method for the LLM driven configurable autonomous interviews, using the system depicted in FIG. 1, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1, FIG. 2A, FIG. 2B and the steps of flow diagram as depicted in FIG. 3A and FIG. 3B. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

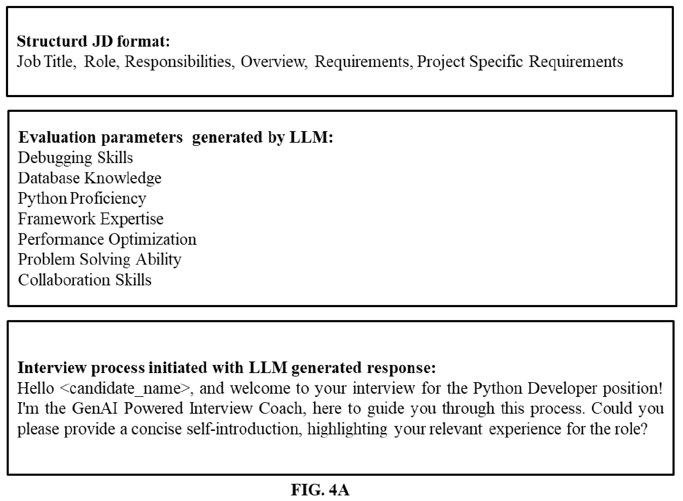

Further, FIGS. 4A through 4F depict an example interview process handled by the system 100 for a received JD and a received resume of a candidate.

**Example JD for a job position applied by a candidate:**
JD = (Job Description
Job Title: Python Developer
Role: Developer
Responsibilities:
   Key Responsibilities:
   - Ability to solution and identify the different systems required for implementation
   - Write clean, efficient, reusable, testable, and scalable server-side logic to create responsive web applications
   - Integrate front-end developer-created user-facing components with server-side logic
   - Create high-availability, low-latency, and high-performance applications
   - Collaborate with design and product teams to understand end-user requirements
   - Work on improving the server-side platform and web frameworks such as Django, Fastapi, etc.
   - Ability to work with Python libraries such as pandas, numpy, etc.
   - Deploy the application, perform usability, automation, improvement and maximize application performance
   - Debug software applications using test framework tools like Pytest, Behave, etc.
   - Improve the functionalities of existing software systems
   - Stay up-to-date with the latest technology and industry trends Skill Requirements:
   - Preferably a degree Computer Science or a similar discipline
   - Prior experience as a Python developer is desirable
   - Expertise in at least one Python framework and a working knowledge of front-end technologies
   - Understanding of how Object Relational Mapper libraries function
   - Understanding of front-end programming languages)
Example Resume:
   resume = (Python Backend developer
   Education: BCA in Computer Science
Areas of Interest:
   Skills: Python, Devops, PostgreSql, Django, ELK
   Project Experience: Python Backend developer
   Technologies: python, django, postgress, backend developer
   Highlights: Hackathons, Code vita coding topper
   Certifications: Azure developer
   Achievements: wings)

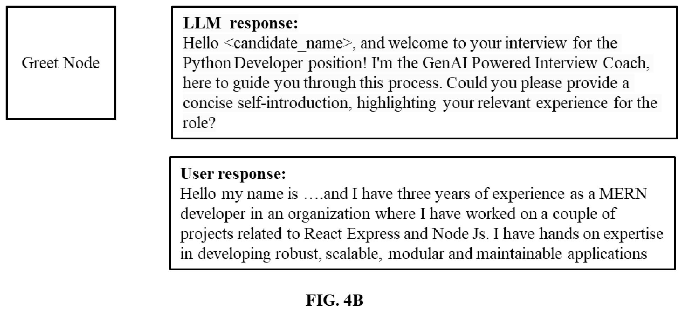

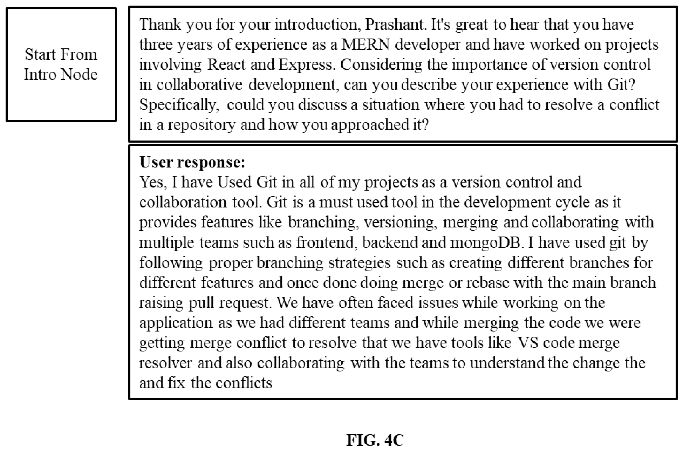

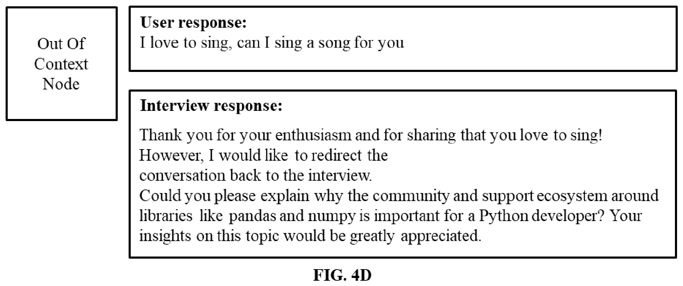

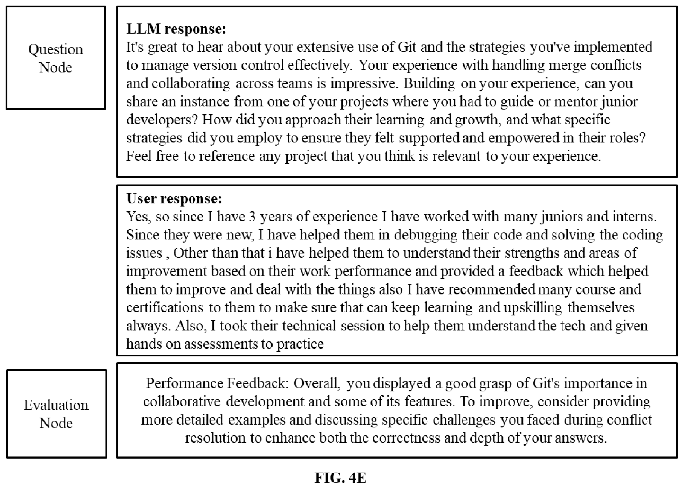

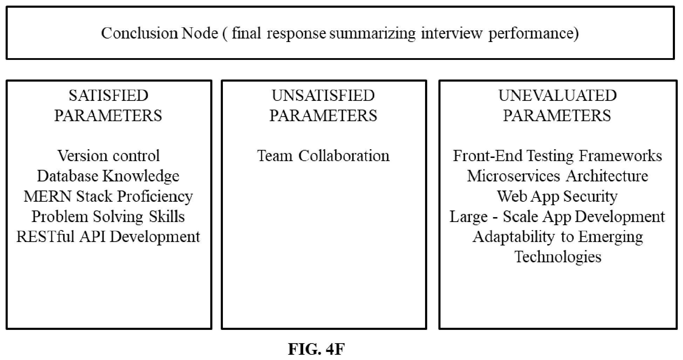

The method 300 can be better understood in conjunction with FIG. 4, which depicts example LLM generated responses and example user responses to the LLM output (to be understood as response of the candidate) during the entire interview process.

Referring to the steps of the method 300, at step 302 of the method 300, the one or more hardware processors 104 via a first instance of LLM extract from the JD, a structured JD format. As depicted in FIG. 2A, the structured format is constructed by performing validation of the JD for technical and contextual detail. Then extracting a plurality job parameters. The plurality of job parameters comprise a job title, a role, an overview of responsibilities, a set key responsibilities, a set of requirements, and a set of project specific requirements, and the like. Thereafter checking if content associated with the plurality of parameters is present and detailed. The gaps are identified and the first instance of the LLM is prompted to restructure and standardize the content. FIG. 4A depicts example structured JD format extracted from the example JD for the initiated interview process of an individual candidate, also referred to as user.

The process of extracting structured job parameters from a job description (JD) using a Large Language Model (LLM) involves three key steps:
First, an input validation is performed where the JD is checked for sufficient technical and contextual detail. This step includes a human-in-the-loop review to ensure that the input meets a minimum quality threshold before being passed to the model. Second, during an initial extraction, the LLM identifies and extracts a set of predefined job parameters, such as job title, role, responsibilities overview, key responsibilities, requirements, and project-specific requirements. Third, the validation phase assesses whether all required parameters are present and sufficiently detailed. If gaps or structural inconsistencies are detected, the LLM is re-prompted to restructure and standardize the content using a guided template. This final step ensures all JDs conform to a consistent format, enabling accurate downstream processing and analysis.

Example of restructured JD post processing:

```
    Post Processing JD:
    {
    "role": "Developer",
    "job_title": "Python Developer",
    "requirements": [
    "Preferably a degree in Computer Science or a similar discipline",
    "Prior experience as a Python developer is desirable",
    "Expertise in at least one Python framework and a working knowledge of front-
    end technologies",
    "Understanding of how Object Relational Mapper libraries function",
    "Understanding of front-end programming languages"
    ],
    "key_responsibilities": [
    "Ability to solution and identify the different systems required for
    implementation",
    "Write clean, efficient, reusable, testable, and scalable server-side logic to
    create responsive web applications",
    "Integrate front-end developer-created user-facing components with server-side
    logic",
    "Create high-availability, low-latency, and high-performance applications",
    "Collaborate with design and product teams to understand end-user
    requirements",
    "Work on improving the server-side platform and web frameworks such as
    Django, Fastapi, etc",
    "Ability to work with Python libraries such as pandas, numpy, etc",
    "Deploy the application, perform usability, automation, improvement and
    maximise application performance",
    "Debug software applications using test framework tools like Pytest, Behave,
    etc.",
    "Improve the functionalities of existing software systems"
    ],
    "responsibilities_overview": "The Python Developer will be responsible for
    developing server-side logic for responsive web applications, ensuring high
    performance and responsiveness to requests from the front-end. This role
    involves collaboration with design and product teams to meet end-user
    requirements effectively.",
    "project_specific_requirements": "The Python Developer will focus on
    enhancing and developing new functionalities for various web applications. This
    includes working on server-side platforms and frameworks, and integrating
    technologies to ensure seamless application performance. Staying updated with
    the latest technologies and industry trends is crucial for continuous improvement
    and implementation of best practices."
    }
```

As depicted in FIG.2A and according to step 304, the one or more hardware processor 104 are configured by the instructions to prompt the first instance of the LLM to generate a plurality of evaluation parameters from the structured JD format via a prompt constructed from the structured JD. The evaluation parameters comprise technical parameters, non-technical and project context parameters. Further, the plurality of evaluation parameters can be validated by a subject matter expert enabling the SME to alter the parameter description in order to adjust the difficulty and depth. For the example use case of FIG. 4A, the evaluation parameters generated by LLM include debugging skills, database knowledge, Python proficiency, framework expertise, performance optimization, problem solving ability and collaboration skills.

The plurality of evaluation parameters enable dynamically planning of an interview of a candidate applying for the JD. Each of the plurality of evaluation parameters are adjusted one at a time for precise control over the plurality of evaluation parameters to be assessed. Each of the plurality of evaluation parameter is treated as a goal assigned to a corresponding node among a plurality of nodes during the interview. Each of the plurality of nodes utilize each of the plurality of evaluation parameters as a basis for generating questions and conducting evaluations. The goal is to generate a valid question which aligns with evaluation parameter under consideration.

As can be referred to FIG. 4 and Tables 1 to 10, the plurality of nodes include a greet node, an introduction node, an out of context node, a question node, an evaluation node and a conclusion node. Each of the nodes is handled centrally by a router node to control progression of the interview process through the plurality of nodes

At step 306, the one or more hardware processor 104 are configured by the instructions to initiate the interview process with the candidate in accordance with the plurality of evaluation parameters and a resume context extracted from a resume of the candidate. To obtain the resume context, the system 100 is configured to check whether the resume of the particular candidate has any relevant data about the evaluation parameter. If relevant content is identified, then the questions will be framed as per the relevant content in the resume.

The interview process, also depicted in FIG. 2B and 2C comprises executing the following steps by the system 100:
1. At step 306a, the router node handles progression of the interview process through the plurality of nodes comprising a type of node that includes a greet node, an introduction node, a question node, an evaluation node and a conclusion node in accordance with a change of a state triggered at each node based on response of the candidate to a dialogue generated by an associated second instance of the LLM at each node. The router node is the central node which takes inputs of the current state of the interview (conversation b/w user and LLM) , the task for router node is to determine which node to move to next. The context of the current state determines the path to go forward, and this processing occurs in the router node. Each node is configured with an associated objective or goal to be achieved before proceeding to a successive node among the plurality of nodes. Each node holds a prompt template, which is the instruction to the LLM. Each of these nodes is controlled by the router node, which decides the next step to be followed based on the context / current state at that instance. The evaluation node analyzes the response for questions generated by the associated second instance LLM at the question node.
2. At step 306b, there is an iterative evaluation of a response of the candidate performed against the plurality of evaluation parameters at the evaluation node via the associated second instance of LLM . The response refers to candidates reaction to the dialogue at the question node with reference to a threshold value indicative of quality of the response. The threshold value used for evaluation is determined through a self-ask mechanism within the LLM. First, when a response is generated, the system and LLM internally queries themselves to assess whether the answer sufficiently addresses all aspects of the input question or if further clarification is needed. Second, this internal self-evaluation helps determine a threshold value, which reflects the completeness and relevance of the response. This value is computed at runtime by the LLM and acts as an indicator of answer quality. Third, this threshold plays a critical role in the post-interview phase, as it is factored into the final evaluation summary, helping to determine whether each evaluation parameter was adequately covered during the interview. This mechanism ensures a more objective and consistent assessment across different candidate responses.
   - The self-ask mechanism of the LLM (second instance) is central to decision-making within the interview flow, particularly in navigating across nodes in the underlying graph.
   - First, at each node, the LLM evaluates whether to proceed to the next step based on a combination of three contextual inputs: the user's response, the generated question, and the associated evaluation parameter.
   - Second, these inputs are passed to the LLM, which internally reasons over them to generate a reflective response, essentially asking self, whether the given context sufficiently satisfies a goal of the current node.
   - Third, based on this output, a decision is made on whether to move forward, revisit the same node, or branch into a different path in the graph.
   - Finally, this dynamic routing enabled by the self-ask process ensures that the interview remains adaptive, context-aware, and focused on validating the completeness and depth of candidate responses at each stage.
3. At step306c, final evaluation is performed of each of the evaluated plurality of parameters at conclusion node to compile score in context of the associated objective or goal of each node, wherein the conclusion node with the associated second instance of the LLM generates a final response summarizing the interview performance.

The interview planning is dynamically performed on the fly by the system 100. Dynamic planning of an interview is enabled through a structured, yet flexible approach centered around evaluation parameters. As depicted via nodes in FIGS. 4B through 4D, at first, individual evaluation parameters extracted from the job description can be adjusted one at a time, allowing for precise control over what should be assessed. Each parameter is treated as a distinct goal, which is assigned to a corresponding node during the interview. These nodes use the parameter as a basis for generating questions and conducting evaluations, making the process adaptive and focused. Second, a human-in-the-loop reviews the initial parameter set to ensure completeness and relevance. The evaluator can fill in missing parameters, introduce new ones based on domain knowledge, or revise existing parameters to better align with the role's requirements. Third, the evaluator defines the structure of the interview itself-determining how many conceptual, scenario-based, or technical questions should be included based on the finalized parameters. Finally, additional configurations such as interview duration, the total number of evaluation goals, and evaluation rubrics are set to tailor the interview experience and ensure it aligns with internal assessment standards.

FIG. 4E depicts the actions at the conclusion node for the candidate being evaluated for the JD.

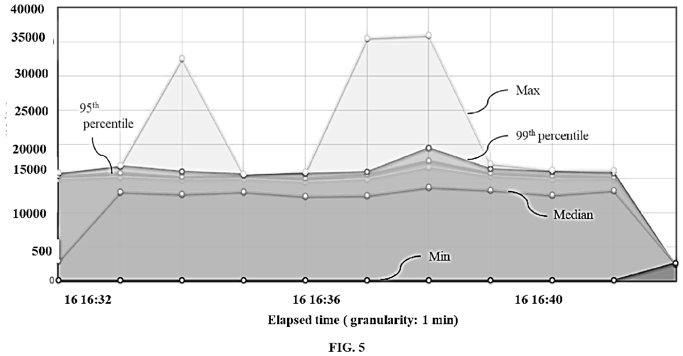

Experiment and Test Data: Depicting scalability performance of the system 100 disclosed herein.
i) Test Scenario:
   Number of peak concurrent users - 500
   Number of peak concurrent requests - 2500
   Average response time - 27 seconds
   Minimum Response Time - 950ms
   Maximum Response Time - 96 seconds
   Failure Rate - 0%
ii) Hardware
   RAM - 16GB
   CPU - Intel i5 11th Gen
   Storage - 256GB
iii) Response Time Percentiles (Successful Responses) as depicted in FIG. 5
iv) Token usage:
   Total Duration: 30 Minutes
   Total Messages: 20
   Total Node Calls: 30
   Total LLM Calls: 46
   Total Tokens: 26,195

Provided below are tables depicting LLM calls and token usage of each stage in an interview. The tables below give clear understanding of the usage of tokens and how they are handled efficiently at each type of node.

**Table 1**

| Greeting Stage | | |
|---|---|---|
| Greeting Stage (node): Nodes Used: 1, LLM Calls: 4, Total Tokens: 1,165 | | |
| **Node** | **Action** | **Tokens Used** |
| Greet Node | Extract Role | 281 |
| Greet Node | Greet Candidate | 491 |
| Greet Node | Generate Evaluation Parameters | 393 |
| Greet Node | Get Name | 0 |
| Node | Action | Tokens Used |

**Table 2**

| Initial Question from Introduction | | |
|---|---|---|
| Introduction Stage (nodes involved): Nodes Used: 4, LLM Calls: 5, Total Tokens:946 | | |
| Node | **Action** | **Tokens Used** |
| Router Node | Determine Interview Stage | 444 |
| Start From Intro Node | Extract Introduction | 502 |
| | | |
| | Interview Stage | |

**Table 3**

| Evaluation Stage | | |
|---|---|---|
| Question Stage (nodes involved) Iteration1: Nodes Used: 3, LLM Calls: 4, Total Tokens: 2,429 | | |
| **Node** | **Action** | **Tokens Used** |
| Evaluation Node | Evaluate Answer | 613 |
| Router Node | Check Evaluation Parameters | 1,025 |
| Router Node | Determine Interview Stage | 462 |
| Ask Question node | Ask New Question | 329 |

**Table 4**

| Evaluation + Question | | |
|---|---|---|
| Question Stage (node involved) Iteration 2: Nodes Used: 3, LLM Calls: 4, Total Tokens: 2,601 | | |
| **Node** | **Action** | **Tokens Used** |
| Evaluation Node | Evaluate Answer | 607 |
| Evaluation Node | Check Evaluation Parameters | 1,206 |
| Router Node | Determine Interview Stage | 451 |
| Ask Question node | Ask New Question | 337 |

**Table 5**

| Evaluation + Question | | |
|---|---|---|
| Question Stage (node involved) Iteration 3: Nodes Used: 3, LLM Calls: 4, Total Tokens: 2,769 | | |
| **Node** | **Action** | **Tokens Used** |
| Evaluation Node | Evaluate Answer | 620 |
| Router Node | Check Evaluation Parameters | 1,280 |
| Router Node | Determine Interview Stage | 468 |
| Ask Question node | Ask New Question | 401 |

**Table 6**

| Evaluation + Question | | |
|---|---|---|
| Question Stage (node involved) Iteration 4: Nodes Used: 3, LLM Calls: 4, Total Tokens: 3,054 | | |
| **Node** | **Action** | **Tokens Used** |
| Evaluation Node | Evaluate Answer | 655 |
| Router Node | Check Evaluation Parameters | 1,437 |
| Router Node | Determine Interview Stage | 500 |
| Ask Question node | Ask New Question | 462 |

**Table 7**

| Evaluation + Question | | |
|---|---|---|
| Question Stage (node) Iteration 5: Nodes Used: 3, LLM Calls: 5, Total Tokens: 3,630 | | |
| **Node** | **Action** | **Tokens Used** |
| Evaluation Node | Evaluate Answer | 641 |
| Need Clarification | Same question, reframed | 597 |
| Router Node | Check Evaluation Parameters | 1475 |
| Router Node | Determine Interview Stage | 470 |
| Ask Question node | Ask New Question | 477 |

**Table 8**

| Evaluation + Question | | |
|---|---|---|
| Question Stage (node involved) Iteration 6: Nodes Used: 3, LLM Calls: 4, Total Tokens: 3,031 | | |
| **Node** | **Action** | **Tokens Used** |
| Evaluation Node | Evaluate Answer | 638 |
| Evaluation Node | Check Evaluation Parameters | 1,427 |
| Router Node | Determine Interview Stage | 460 |
| Ask Question node | Ask New Question | 506 |

**Table 9**

| Conclusion Stage Conclusion Stage (node involved): Nodes Used: 3, LLM Calls: 4, Total Tokens: 3,386 | | |
|---|---|---|
| **Node** | **Action** | **Tokens Used** |
| Evaluation Node | Evaluate Answer | 647 |
| Evaluation Node | Further Evaluation | 629 |
| Evaluation Node | Check Evaluation Parameters | 1,576 |
| Router Node | Determine Interview Stage | 469 |
| Conclusion Node | Extract Feedback Summary | 694 |

**Table 10**

| Summary | | | |
|---|---|---|---|
| **Stage** | **Nodes Used** | **LLM Calls** | **Tokens Used** |
| Greeting | 1 | 4 | 1,651 |
| Info Gathering & Initial Question | 4 | 5 | 9,46 |
| Answer Evaluation & Questions | 18 | 28 | 15,085 |
| Conclusion | 3 | 6 | 3,386 |
| Total | 30 | 46 | 21,068 |

The summary table 10 indicates the LLM calls and token usage of each stages in an interview as executed by the system 100. From these token usage we can get a clear idea on how the usage of tokens and handled efficiently.

Thus, the method and system disclosed herein provide a scalable memory efficient LLM driven autonomous interview simulator.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

It is to be understood by a person having ordinary skill in the art or person skilled in the art that the referred LLM model(s) are exemplary and shall not be construed as limiting the scope of the present disclosure and may be trained by any training dataset that meets the mentioned defining characteristics / or has characteristics that define the exemplary training dataset mentioned.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) comprising:
extracting (302) from a job description (JD), by one or more hardware processors via a first instance of a Large Language Model (LLM), a structured JD format by:
performing a validation of the JD for technical and contextual details;
extracting a plurality job parameters, from a validated JD; and
checking if content associated with the plurality of job parameters is present and detailed, wherein gaps are identified and the first instance of the LLM is prompted obtain a restructured and standardized content that forms the structured JD format;
prompting (304), via the one or more hardware processors, the first instance of the LLM to generate a plurality of evaluation parameters from the structured JD format via a prompt constructed from the structured JD,
wherein the plurality of evaluation parameters enable dynamic planning of an interview of a candidate applying for a job position represented by the JD,
wherein each of the plurality of evaluation parameters is adjusted one at a time for precise control over the plurality of evaluation parameters to be assessed,
wherein each of the plurality of evaluation parameters is treated as a goal assigned to a node among a plurality of nodes during the interview, wherein the plurality of nodes comprising a greet node, an introduction node, an out of context node, a question node, an evaluation node, and a conclusion node, handled centrally by a router node to control progression of the interview process through the plurality of nodes, and
wherein each of the plurality of nodes hold a prompt template for utilizing each of the plurality of evaluation parameters as a basis for generating questions and conducting evaluations; and
initiating (306), by the one or more hardware processors, the interview process with the candidate in accordance with the plurality of evaluation parameters and a resume context extracted from a resume of the candidate, wherein the interview process comprises:
handling via the router node, a progression (306a) of the interview process through the plurality of nodes, in accordance with a change of a state triggered at each node based on response of the candidate to a dialogue generated by an associated second instance of the LLM at each node, wherein post achieving the goal, each node proceeds to a successive node among the plurality of nodes, and wherein the evaluation node analyzes the response for questions generated by the associated second instance LLM at the question node;
iteratively evaluating (306b) against each of the plurality of evaluation parameters at the evaluation node via the associated second instance of LLM a response of the candidate to the dialogue at the question node with reference to a threshold value indicative of quality of the response; and
performing a final evaluation (306c) of each of the evaluated plurality of parameters at the conclusion node to compile score in context of the goal associated with each node, wherein the conclusion node with the associated second instance of the LLM generates a final response summarizing the interview performance.

2. The method as claimed in claim 1, wherein the plurality of evaluation parameters comprise technical parameters, non-technical and project context parameters, and are validated by a subject matter expert.

3. The method as claimed in claim 1, wherein the plurality of job parameters comprise a job title, a role, an overview of responsibilities, a set key responsibilities, a set of requirements, and a set of project specific requirements.

4. The method as claimed in claim 1, wherein a human-in-the-loop is allowed to participate in the dynamically planning of the interview for:
reviewing the validated JD,
reviewing and modifying the extracted plurality of evaluation parameters to ensure completeness and relevance and better align with a set of key requirements present in the structured JD format, defining a structure for the interview defining number of conceptual, scenario-based, or technical questions to be included, and
configuring duration of the interview, a total number of the goals, and a scoring criteria to tailor the interview and aligns the interview with internal assessment standards.

5. The method as claimed in claim 1, wherein,
the threshold value is determined through a self-ask mechanism within the second instance of the LLM and computed at runtime,
the determined threshold value reflects the completeness and relevance of the response, and
is factored into the final response helping to determine whether each of the plurality of evaluation parameter was adequately covered during the interview ensuring objective and consistent assessment across different candidate responses.

6. A system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
extract from a job description (JD) via a first instance Large Language Model (LLM), a structured JD format by:
performing a validation of the JD for technical and contextual details;
extracting a plurality job parameters from a validated JD; and
checking if content associated with the plurality of job parameters is present and detailed, wherein gaps are identified and the first instance of the LLM is prompted to obtain a restructured and standardized content that forms the structured JD format;
prompt the first instance of the LLM to generate a plurality of evaluation parameters from the structured JD format via a prompt constructed from the structured JD,
wherein the plurality of evaluation parameters enable dynamic planning of an interview of a candidate applying for a job position represented by the JD,
wherein each of the plurality of evaluation parameters is adjusted one at a time for precise control over the plurality of evaluation parameters to be assessed,
wherein each of the plurality of evaluation parameter is treated as a goal assigned to a node among a plurality of nodes during the interview, the plurality of nodes comprising a greet node, an introduction node, an out of context node, a question node, an evaluation node and a conclusion node handled by a router node centrally controlling progression of the interview process through the plurality of nodes, and
wherein each of the plurality of nodes hold a prompt template for utilizing each of the plurality of evaluation parameters as a basis for generating questions and conducting evaluations; and
initiate the interview process with the candidate in accordance with the plurality of evaluation parameters and a resume context extracted from a resume of the candidate, wherein the interview process comprises:
handling via the router node, a progression of the interview process through the plurality of nodes, in accordance with a change of a state triggered at each node based on response of the candidate to a dialogue generated by an associated second instance of the LLM at each node, wherein post achieving the goal, each node proceeds to a successive node among the plurality of nodes, and wherein the evaluation node analyzes the response for questions generated by the associated second instance LLM at the question node;
iteratively evaluating against each of the plurality of evaluation parameters at the evaluation node via the associated second instance of LLM a response of the candidate to the dialogue at the question node with reference to a threshold value indicative of quality of the response; and
performing a final evaluation of each of the evaluated plurality of parameters at the conclusion node to compile score in context of the goal associated with each node, wherein the conclusion node with the associated second instance of the LLM generates a final response summarizing the interview performance.

7. The system as claimed in claim 6, wherein the plurality of evaluation parameters comprise technical parameters, non-technical and project context parameters, and are validated by a subject matter expert.

8. The system as claimed in claim 6, wherein the plurality of job parameters comprise a job title, a role, an overview of responsibilities, a set key responsibilities, a set of requirements, and a set of project specific requirements.

9. The system as claimed in claim 6, wherein a human-in-the-loop is allowed to participate in the dynamically planning of the interview for:
reviewing the validated JD;
reviewing and modifying the extracted plurality of evaluation parameters to ensure completeness and relevance and better align with a set of key requirements present in the structured JD format;
defining a structure for the interview defining number of conceptual, scenario-based, or technical questions to be included; and
configuring duration of the interview, a total number of the goals, and a scoring criteria to tailor the interview and aligns the interview with internal assessment standards.

10. The system as claimed in claim 6, wherein, the threshold value
is determined through a self-ask mechanism within the second instance of the LLM and computed at runtime,
the determined threshold value reflects the completeness and relevance of the response, and
is factored into the final response helping to determine whether each of the plurality of evaluation parameter was adequately covered during the interview ensuring objective and consistent assessment across different candidate responses.

11. One or more non-transitory machine-readable information storage mediums comprising one or more instructions which when executed by one or more hardware processors cause:
extracting from a job description (JD) via a first instance of a Large Language Model (LLM), a structured JD format by:
performing a validation of the JD for technical and contextual details;
extracting a plurality job parameters, from a validated JD; and
checking if content associated with the plurality of job parameters is present and detailed, wherein gaps are identified and the first instance of the LLM is prompted obtain a restructured and standardized content that forms the structured JD format;
prompting the first instance of the LLM to generate a plurality of evaluation parameters from the structured JD format via a prompt constructed from the structured JD,
wherein the plurality of evaluation parameters enable dynamic planning of an interview of a candidate applying for a job position represented by the JD,
wherein each of the plurality of evaluation parameters is adjusted one at a time for precise control over the plurality of evaluation parameters to be assessed,
wherein each of the plurality of evaluation parameters is treated as a goal assigned to a node among a plurality of nodes during the interview, wherein the plurality of nodes comprising a greet node, an introduction node, an out of context node, a question node, an evaluation node, and a conclusion node, handled centrally by a router node to control progression of the interview process through the plurality of nodes, and
wherein each of the plurality of nodes hold a prompt template for utilizing each of the plurality of evaluation parameters as a basis for generating questions and conducting evaluations; and
initiating the interview process with the candidate in accordance with the plurality of evaluation parameters and a resume context extracted from a resume of the candidate, wherein the interview process comprises:
handling via the router node, a progression of the interview process through the plurality of nodes, in accordance with a change of a state triggered at each node based on response of the candidate to a dialogue generated by an associated second instance of the LLM at each node, wherein post achieving the goal, each node proceeds to a successive node among the plurality of nodes, and wherein the evaluation node analyzes the response for questions generated by the associated second instance LLM at the question node;
iteratively evaluating against each of the plurality of evaluation parameters at the evaluation node via the associated second instance of LLM a response of the candidate to the dialogue at the question node with reference to a threshold value indicative of quality of the response; and
performing a final evaluation of each of the evaluated plurality of parameters at the conclusion node to compile score in context of the goal associated with each node, wherein the conclusion node with the associated second instance of the LLM generates a final response summarizing the interview performance.

12. The one or more non-transitory machine-readable information storage mediums as claimed in claim 11, wherein the plurality of evaluation parameters comprise technical parameters, non-technical and project context parameters, and are validated by a subject matter expert.

13. The one or more non-transitory machine-readable information storage mediums as claimed in claim 11, wherein the plurality of job parameters comprise a job title, a role, an overview of responsibilities, a set key responsibilities, a set of requirements, and a set of project specific requirements.

14. The one or more non-transitory machine-readable information storage mediums as claimed in claim 11, wherein a human-in-the-loop is allowed to participate in the dynamically planning of the interview for:
reviewing the validated JD,
reviewing and modifying the extracted plurality of evaluation parameters to ensure completeness and relevance and better align with a set of key requirements present in the structured JD format, defining a structure for the interview defining number of conceptual, scenario-based, or technical questions to be included, and
configuring duration of the interview, a total number of the goals, and a scoring criteria to tailor the interview and aligns the interview with internal assessment standards.

15. The one or more non-transitory machine-readable information storage mediums as claimed in claim 11, wherein,
the threshold value is determined through a self-ask mechanism within the second instance of the LLM and computed at runtime,
the determined threshold value reflects the completeness and relevance of the response, and
is factored into the final response helping to determine whether each of the plurality of evaluation parameter was adequately covered during the interview ensuring objective and consistent assessment across different candidate responses.
